# EUROPEAN PATENT SPECIFICATION

(11) **EP 3 337 602 B1**
(45) Date of publication and mention of the grant of the patent: **08.05.2019**
(21) Application number: 16756999.5
(22) Date of filing: 18.08.2016
(51) Int. Cl.: B01J 8/00

(54) **CONTAINING UNIT WITH A DISCHARGE DEVICE TO REMOVE THE MATERIAL CONTAINED IN A CONTAINER IN A CONTROLLED MANNER**
AUFNAHMEEINHEIT MITAUSGABEVORRICHTUNG ZUR ENTFERNUNG DES IN EINEM BEHÄLTER ENTHALTENEN MATERIALS AUF KONTROLLIERTE WEISE
UNITÉ DE CONFINEMENT DOTÉE D'UN DISPOSITIF D'ÉVACUATION POUR ÉLIMINER LA MATIÈRE CONTENUE DANS UN RÉCIPIENT DE MANIÈRE CONTRÔLÉE

(30) Priority: 20.08.2015 IT UB20153180
(43) Date of publication of application: 27.06.2018
(73) Proprietor: Danieli & C. Officine Meccaniche S.p.A., 33042 Buttrio (IT); HYL Technologies, S.A. de C.V., Nuevo Leon 66450 (MX)
(72) Inventor: DELLA NEGRA, Angelico, 33040 Povoletto (IT); PRIMAVERA, Alessandra, 33040 Faedis (IT); ZUGLIANO, Alberto, 33044 Manzano (IT); ALVAREZ VAZQUEZ, Eduardo, San Nicolas De Los Garza 66452 (MX); GARZA RODRIGUEZ, Gilberto, Col. Cortijo del Rio-Monterrey 66890 (MX)
(74) Representative: Petraz, Gilberto Luigi
(86) International application number: PCT/EP2016/069596
(87) International publication number: WO 2017/029354

(56) References cited:
- US-A1- 2009 178 336

## Description

### FIELD OF THE INVENTION

The present invention concerns a containing unit with a discharge device to remove, selectively and in a controlled manner, the granular material contained in a container, in particular but not only, a large-size vertical type container, that is, one able to contain inside it many tons of material, for example a shaft furnace for direct reduction of iron ores in the form of pellets of pre-reduced iron (DRI), or a DRI cooler.

### BACKGROUND OF THE INVENTION

"Direct reduction" indicates a family of processes for the production of metal iron starting from mineral iron and performed at temperatures lower than those at which the components melt.

Some containers or vessels used in such processes belong to the class of vertical or shaft furnaces, normally up to a few tens of meters high and a few meters wide, operating at a pressure slightly above or equal to atmospheric pressure or even up to and more than 10 bar.

Some examples of vessels used are the reactor, in which the DRI is produced by circulating a reducing gas through a vertically mobile bed of particulate mineral iron at a maximum temperature in the order of about 1,000°C, and the cooler, in which, before being discharged, the DRI is cooled to the desired temperature by introducing into the corresponding vessel cooling gas that removes heat from the particles of DRI. For a good yield in both processes, it is fundamental that all the material inside the vessels flows uniformly, from the top downward due to gravity: it is important, that is, that every particle of material remains inside the corresponding vessel for a similar period of time and is subjected to the same reactions.

Vessels of this type generally comprise two distinct parts. A first part, the upper part, is substantially cylindrical, and the process properly takes place inside it: reducing gas is introduced into the reactor, so that the reduction reactions of the iron oxides and the carburization of the reduced material occur, and cooling gas is introduced into the cooler, so that the material is cooled before it is transferred to the second part below. The second part of the vessel is generally shaped substantially like a truncated cone, and its function is to convey the material toward a single exit point where the material is discharged in a controlled manner. However, the truncated cone part of the vessel, converging downward and called "cone", does not allow every particle of DRI to arrive at the exit in the same time. This zone, which for vessels having high productivity can exceed a height of about 20 meters, has at least the following disadvantages:
- from the process point of view (reduction-carburization for reactors and cooling for coolers) it is a "dead" zone, in that the process that has to take place in the vessel occurs in the first part above;
- it increases heat dispersion due to the high surface exposed;
- it constitutes a zone where problems may possibly develop in the descent of the material, with the risk of agglomerates forming and a consequent blockage of the flow due to an increase in conditions unfavorable to the descent which could occur in the cone. These possibilities are greatly feared by DRI producers due to the loss of production that ensues, and the damage that the vessel could suffer during the removal of the blockage;
- in this zone, problems may also arise in the descent of the hot discharged material because as the temperature increases so does the friction coefficient between the particles of DRI, and inside the cone the particles take on almost a plastic consistency, causing agglomerates which in the long term obstruct the passage;
- in the case of a cooler, the presence of the cone does not allow a homogeneous treatment of the DRI since the material at the center of the vessel tends to descend at a greater speed than that which is on the periphery, in contact with the cooler wall; but the peripheral material is the one which cools most inasmuch as it exchanges heat with the wall and is more affected by the cooling gases. Consequently, the material at the center of the vessel is cooled less than the peripheral one and also spends less time inside the vessel due to the greater speed of descent, thus entailing considerably different temperatures between the different particles of DRI discharged.

The elimination of the conical part has already been contemplated in some known solutions, such as for example those that provide that the DRI is discharged from a reactor using a series of screws. In these known solutions, no cone is provided to convey the material to the exit, but several screws, even more than ten, disposed cantilevered and radially in the container, which convey the material through an equal number of lateral discharge exits. The presence of a large number of exits for the material considerably complicates the immediate use or storage of the DRI. The horizontal transfer of the DRI by the screws has some critical aspects, such as for example packing by the screw blades. Moreover, the use of cantilevered screws makes it necessary to use very large shafts in order to support the weight of the member and all the material above it. Furthermore, the fact that the screws have a considerable length (from the external wall to the center of the vessel) implies strong forces to be taken into account, especially in the case of large vessels. A container is also known provided with a central internal structure which defines an annular discharge section in which some valves are inserted, along the circumference, each one oscillating around its own axis, which discharge the material downward with oscillatory movements. This known solution has at least the following disadvantages: for example the positioning of the valves along the circumference makes the structure very complex and, what is more, the particular type of valve allows only an intermittent discharge which, especially for large sizes, is also not homogeneous on the radius of the vessel.

Therefore, all the solutions in the state of the art do not allow to discharge the material homogeneously along the whole discharge area. In particular, even if they have an optimum geometry, the screws are intrinsically able to discharge a greater quantity of material from the zone farthest from the discharge exit, and a smaller quantity from the zone nearest the discharge exit.

In the same way, the oscillating valves described above do not guarantee the homogeneous discharge of the material since the cavity of each valve is filled as soon as, with the rotatory movement of the valve in one direction, a gap is created between the cavity and the area where the material is discharged; the material that fills the cavity is therefore always derived from the innermost part of the discharge zone. This phenomenon is accentuated as the diameter of the vessel increases and entails a lack of homogeneity in the descent of the material and hence different particles of material remain inside the vessel for different times.

A transferring device is known from US-A-2009/0178336 and is provided with a housing. Two rotatable drive disks and a rotatable material scraper are installed inside the housing.

Disks and scraper rotate such that surfaces of the disks and scraper, which surfaces partly define flow path, move in the direction of flow path.

This transferring device however does not provide a control and measuring of the material from one zone to another. Moreover the movement of material is caused by the rotation of adjacent surfaces and this causes blockages of the material during the transferring, with all the correlated problems.

Other examples of containing units are disclosed in WO-A-2011/121587 and WO-A-2014/168615 that do not face the problems of material blockages inside the container and do not provide, nor incidentally, a solution that solve those problems.

One purpose of the present invention is to provide a containing unit with a device for the controlled discharge of granular material, such as for example DRI, contained inside a container or vessel, that allows a constant and uniform descent of the material toward a determinate exit, hence allowing each part of it to remain inside the container for the same period of time.

Another purpose of the present invention is to provide a containing unit with a removal or discharge device for granular material, for example DRI, which is provided with exit members of limited length, so as to limit the load weighing on the respective shafts of the exit members, even when the diameters of the containers are particularly large, in the order of many meters.

Another purpose of the present invention is to provide a containing unit with a device to discharge granular material, for example DRI, that prevents blockages of material along the descent path.

Another purpose of the present invention is to provide a containing unit with a device to discharge granular material, for example DRI, which considerably limits any possible damage and the quantity of material blocked in the event of malfunctioning of an extractor member.

Another purpose of the present invention is to provide a containing unit with a device to discharge granular material, for example DRI, which allows to considerably limit the height of the container and, in the case of a direct reduction reactor, to limit the cooling of the material, promoting energy recovery in the subsequent melting phase.

The Applicants have devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a containing unit used in iron and steel processes, according to the present invention, which solves in a new and original way the technical problems of the state of the art, comprises a container having a substantially vertical longitudinal axis and at least a lateral wall which defines an internal cavity and is provided with a plurality of through lateral apertures, which put said internal cavity into communication with the outside. The containing unit further comprises a discharge device installed at least partly in the container to divide its internal cavity into a first zone disposed above the discharge device and in which the material is contained and processed, and a discharge zone disposed below the discharge device and through which the material is discharged, in a controlled manner, by the discharge device.

Moreover, the discharge device, according to the present invention, comprises a plurality of movement members each provided with a rotary shaft disposed in one of the lateral apertures and rotatable around its axis of rotation transverse to the longitudinal axis of the container, and movement means solid with the rotary shaft to move the material from the first zone toward a discharge aperture of the discharge zone.

According to a feature of the present invention, each rotary shaft comprises a first part mounted rotatably, through the lateral apertures, on the lateral wall of the container and a second part disposed cantilevered inside the internal cavity of the container. Furthermore, the movement means comprise a plurality of blades mounted radially on the second part of the rotary shaft and defining corresponding containing cells configured to contain the material coming from the first zone and to move it, due to the effect of the rotation of the corresponding rotary shaft from the first zone of the internal cavity toward the discharge aperture.

A movement member of this type is also called a rotary valve.

The particular configuration of the containing unit, according to the present invention, allows to control, in a precise way, the discharge of the material from the upper part, or zone, of the container toward the discharge zone. The movement members provide a control of the time of permanence of the material inside the containing unit to allow that all the processes are completed.

According to one embodiment of the present invention, the second part of each rotary shaft comprises at least two axial zones adjacent to each other along the axis of rotation, and in each of the axial zones there is a specific plurality of said blades that defines a corresponding wheel with blades.

In this way, a containing apparatus is obtained, particularly suitable for containers of high dimensions, such as high diameters. The wheels with blades can be chose, connected to each other, and therefore adapted on each occasion as a function of the dimension of the container. In particular, the number of wheel with blades can be chose in relation of the length of the rotary shaft.

Furthermore, the wheels with blade can be positioned, with respect to each other and to the rotary shaft, according to particular configurations adapted to generate continuous flows of material through the container and to avoid blockages.

According to another embodiment of the present invention, the blades of each wheel with blades are angularly staggered with respect to the blades of an adjacent wheel with blades, to generate instantaneous movement speeds of the material in the first zone that are different from the corresponding and overlying adjacent columns of material.

The angularly staggered disposition of the wheels allow a lack of sync of loading and discharge of the containing cells of adjacent wheels. Therefore the loading and discharge of the containing cells of two adjacent wheels occur in different times avoiding blockages both in the upper part an the lower part of rotary shaft.

According to another embodiment of the present invention, the number of the axial zones of the rotary shaft, which corresponds to the number of the wheels with blades, is comprised between 2 and 5.

According to another embodiment of the present invention, the rotary shaft has a substantially cylindrical shape and the radial size of the blades is constant, so that the containing cells are all the same.

According to a variant, the rotary shaft has a cross section that varies along its axis of rotation so that, given the same radial size of the blades, the containing cells have different volumes along the axis of rotation of the rotary shaft.

According to another embodiment of the present invention, where the container has an axial-symmetrical shape with respect to its longitudinal axis, the movement members are suitable to be disposed radially with respect to the longitudinal axis.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view, lateral and sectioned, of a containing unit with a discharge device according to the present invention is installed;
- fig. 2 is a section from II to II of fig. 1;
- fig. 3 is a section from III to III of fig. 1;
- fig. 4 is a schematic representation of the angular development of the different movement members of the discharge device in fig. 1;
- fig. 5 is an enlarged detail of fig. 1;
- fig. 6 is a section from VI to VI of fig. 5.

### DETAILED DESCRIPTION OF ONE EMBODIMENT

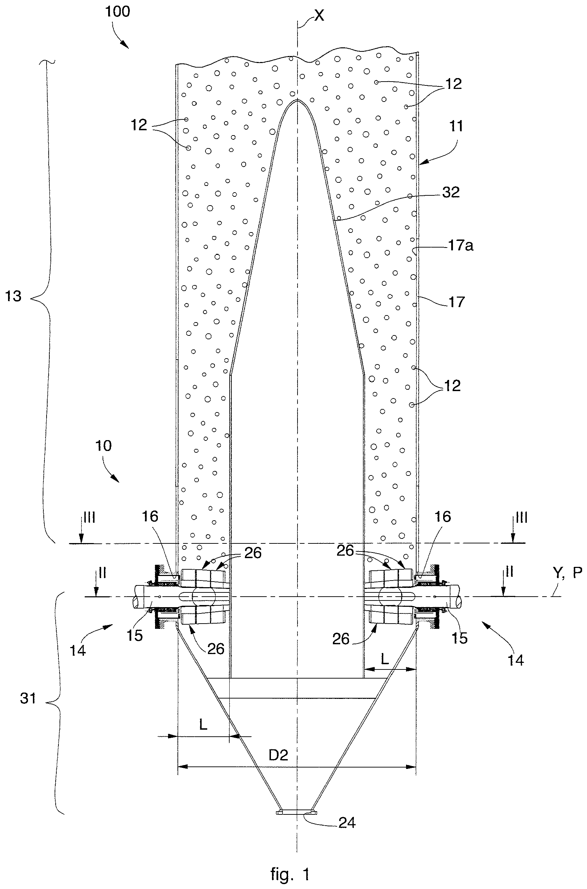

With reference to fig. 1, a containing apparatus 100, according to the present invention, comprises a container 11 and a discharged device 10 to discharge material 12 from the container 11.

In particular, the discharge device 10 according to the present invention is installed in the lower part of a container 11 of material 12, consisting for example of granules or pellets of pre-reduced iron, that is, DRI.

The container 11 comprises a lateral wall 17 substantially coaxial to a longitudinal axis X, which defines an internal cavity 17a. The lateral wall 17 is provided with a plurality of through lateral apertures 16, which put the external cavity 17a into communication with the outside. The axes of the lateral apertures 16 lie on the same horizontal plane P perpendicular to the longitudinal axis X of the container 11.

In this specific case, for convenience of description and merely by way of example, the container 11 has an axial-symmetrical shape and a circular cross section, but it could have a different cross section, for example oval or polygonal.

The discharge device 10 is positioned under a first zone, or active processing zone 13 of the cavity 17a. The active processing zone 13 in the case of a direct reduction reactor means the reduction zone proper, in which, in a known manner, the reduction reactions occur of the minerals containing iron by means of hot, pressurized reducer fluids, while in the case of a cooler it means the cooling zone where the required temperature is reached.

In the example given here, the discharge device 10 comprises eight movement members 14 disposed below the active processing zone 13, each in a corresponding lateral aperture 16. Each movement member 14 comprises a rotary shaft 15 rotatable around its own axis of rotation Y, disposed radially and converging toward the longitudinal axis X.

In this way the eight movement members 14 are angularly staggered with respect to each other in a uniform manner, by 45° each with respect to the adjacent one.

In particular, each rotary shaft 15 comprises a first part 15a mounted rotatably on the lateral wall 17 of the container 11 and a second part 15b disposed cantilevered inside the internal cavity 17a. It is understood that in order to support each rotary shaft 15 rotatably inside the corresponding lateral aperture 16, suitable support means of a known type may be provided, not shown in the drawings, both in the lateral aperture 16 itself, and also outside the container 11, as is easily understood by any person of skill in the art.

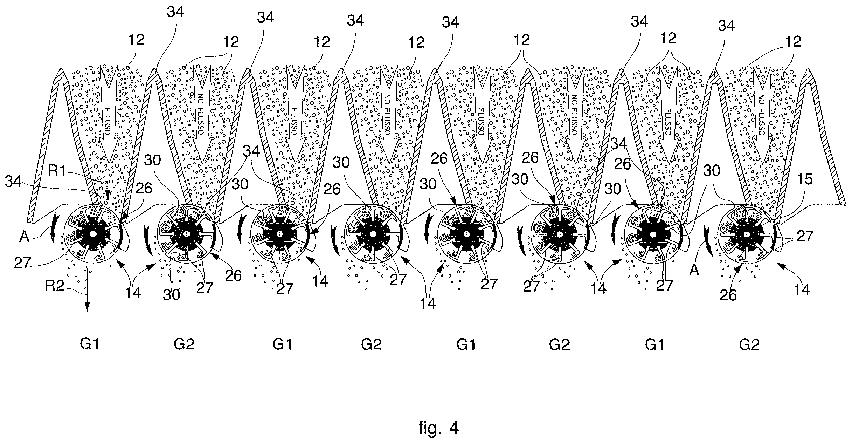

Each rotary shaft 15 is suitable to be made to rotate, in a determinate direction of rotation, clockwise or anti-clockwise. In this case, the movement members 14 all rotate in an anti-clockwise direction (fig. 4).

According to a variant, not shown in the drawings, but easily understood by a person of skill in the art, instead of all turning in the same direction of rotation, the movement members 14 could turn in opposite directions each with respect to the adjacent one.

The rotation of each rotary shaft 15 is imparted by a drive member of a known type and not shown in the drawings.

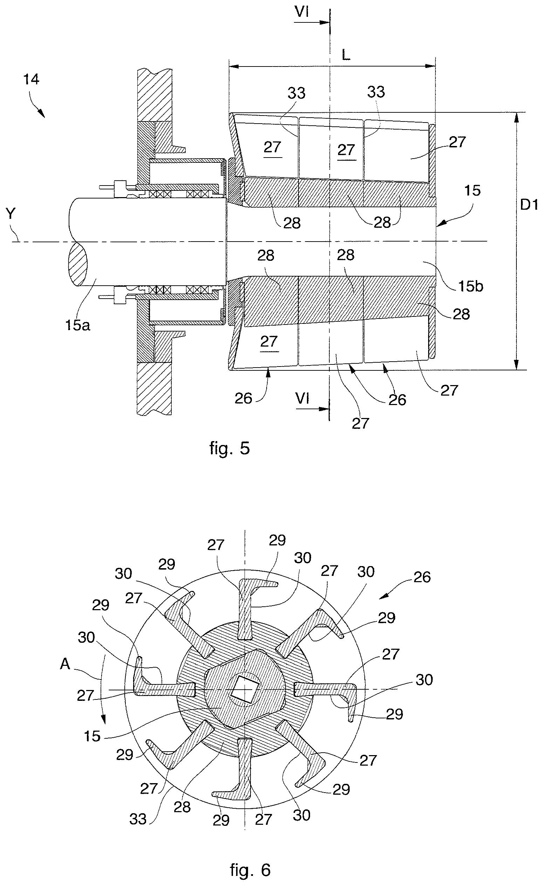

The length L (fig. 5) of the second cantilevered part 15b of each rotary shaft 15 is less than the distance between the corresponding lateral aperture 16 and the longitudinal axis X of the container 11.

Furthermore, each movement member 14 has a maximum transverse size D1 (figs. 1 and 5), perpendicular to the axis of rotation Y of the rotary shaft 15, which is preferably less than the transverse size D2 (fig. 1) of the internal cavity 17a in correspondence with the horizontal plane P.

The rotary shaft 15 is divided into a plurality of axial zones, in the case shown here three (fig. 5), on each of which a wheel with blades 26 is keyed.

Each wheel with blades 26 comprises a plurality of blades 27 (fig. 6), for example eight, which branch off radially from a central body 28, hollow inside and having a shape mating with that of the rotary shaft 15, to allow the body 28 to be positioned on the rotary shaft 15. The blades 27 are angularly equidistant from each other.

According to a variant, not shown in the drawings, the blades 27 can be attached, for example by welding, directly on the rotary shaft 15, without the central body 28 being interposed.

Each blade 27 has a hooked end 29, the protruding part of which projects out tangentially in the opposite direction to the direction of rotation of the rotary shaft 15.

The wheels with blades 26 (figs. 1, 2 and 5) are positioned along the axis of rotation Y so as to be adjacent with each other and in succession, so that the blades 27 advantageously cover the whole length L of the second part 15b of the corresponding rotary shaft 15.

Each pair of successive blades 27 (fig. 6) delimits a containing seating or cell 30, with the function of containing the material 12 during the movement made by the movement member 14.

Between each pair of adjacent wheels with blades 26 a separator disc 33 is disposed (fig. 5), configured so as to prevent the material 12 from passing from one of the wheels with blades 26 to the other.

Each rotary shaft 15 can be either cylindrical, to define containing cells 30 that are substantially all the same along the axis of rotation Y, or conical, or with a variable cross section, to define containing cells 30 that have different volumes along the axis of rotation Y.

Furthermore, in a radial direction, two wheels with blades 26 adjacent and contiguous along the rotary shaft 15 can advantageously be staggered with respect to each other by an angle comprised between 5° and 45°, to guarantee a continuous accumulation of the material in the containing cells 30 and to facilitate the descent of the material 12 in the container 11.

In the example given here, the wheels with blades 26 of a first group G1 of movement members 14 (fig. 4), disposed alternate with respect to a second group G2 of movement members 14, have the same angular stagger, while the wheels with blades 26 of the second group G2 are staggered by the same angle with respect to those of the first group G1.

The misalignment of the blades 27 of two adjacent wheels with blades 26 allows to have instantaneous movement speeds of the material 12 in the container 11, and in particular in the first zone 13, that are different from the corresponding and overlying adjacent columns of material 12; as shown in fig. 4, each wheel with blades 26 receives the material 12, thus making the overlying column descend, in an angular sector of the wheel with blades 26 that is different from the adjacent wheels with blades 26. The material 12 in the container 11 is then made to descend in a non-homogeneous manner and a shearing effect is created on the stream, which advantageously prevents the formation of agglomerates and bridges. In this way a correct flow of the material is obtained over the whole length of each movement member 14.

The same fluidity in the descent of the stream is guaranteed in the direction perpendicular to the movement members 14: to create the same shearing effect and to discourage the agglomeration of the material, it is expedient to stagger the wheels with blades 26 so as to organize in time the filling of the containing cells 30 of the successive wheels with blades 26, as shown in fig. 4.

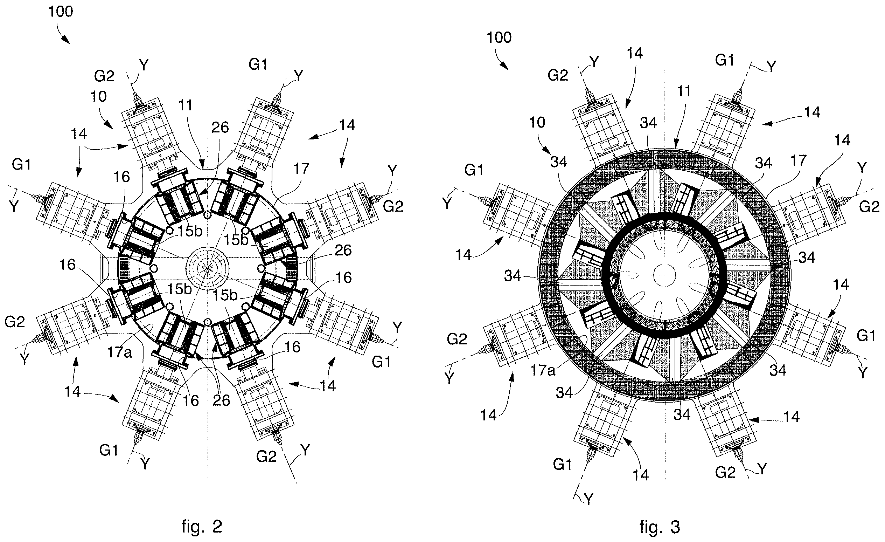

The particles of material, moving vertically due to gravity, are guided toward the movement members 14 by the lateral wall 17, by seven conveyor plates 34 and a central conveyor plate 32, designed with the most suitable inclination for the material and the temperatures involved. In the embodiment shown here, a central conveyor plate 32 is advantageously provided, disposed coaxial to the longitudinal axis X of the internal cavity 17a, and a plurality of radial conveyor plates 34 (fig. 3), disposed radially inside the internal cavity 17a, each above the space that divides two adjacent movement members 14. The purpose of the central conveyor plate 32 is to take the material 12 progressively onto the circumference of the container; thanks to the cooperation of the lateral wall 17, the central conveyor plate 32 and the radial conveyor plates 34, the particles are then advantageously conveyed toward the movement members 14 so as to facilitate the entrance of the individual particles of material 12 into the containing cells 30, preventing any particles from following different paths and therefore guaranteeing that all the material reaches the exit members and is processed in the same way. This makes filling the containing cells 30 more effective and consequently makes the movement caused by the discharge device 10 more efficient.

In particular, adjacent radial conveyor plates 34 define, each other, a plurality of discharge openings 35 through which the material 12 contained in the first zone 13 is charged in the containing cells 30.

The conveyor plates 34 and/or the central conveyor plate 32 define, with the movement members 14, the complete separation of the first zone 13 from the discharge zone 31. The material 12 contained in the first zone 13 can be discharged through the discharge aperture 24, only passing through the movement members 14.

The discharge device 10 is thus able to transfer, in a controlled manner, a determinate quantity of material 12 from the end part of the active zone 13 of the container 11 to a discharge zone 31 below, shaped like a truncated cone and converging downward.

In the lower part of the discharge zone 31, substantially on the bottom of the container 11, there is a discharge aperture 24, from which the material 12 is able to exit the container 11 to be delivered, in a known manner, for example by a pneumatic, gravitational or mechanical feed system, to a user device downstream, such as for example a melting furnace.

In particular, this movement confers on the material 12 a trajectory that comprises a first segment, substantially rectilinear and parallel to the longitudinal axis X of the container 11, indicated schematically by the arrows R1 in fig. 4, a second arched segment, in the direction of rotation indicated by the arrows A and determined by the rotation of the containing cells 30, and a third segment, indicated by the arrows R2, also substantially rectilinear and parallel to the longitudinal axis X, inside the discharge zone 31 and comprised between the movement members 14 and the discharge aperture 24.

The quantity of material 12 moved by each movement member 14 is defined by the product of the volume of the containing cells 30 filled by the material 12, which is known, and the speed of rotation of the rotary shafts 15, selectively adjustable according to specific requirements.

This allows to adjust the discharge and regulate the stream of material 12 in its passage from the end part of the active zone 13 of the container 11 to the discharge zone 31 below, in order to obtain a substantially homogeneous processing of the material 12 in its entirety.

The particular shape and division of each movement member 14 allows to pick up material 12 continuously from the active processing zone 13, preventing the formation of agglomerates which could impede the stream of material 12 and damage the container 11.

Furthermore, the discharge device 10 as described heretofore not only eliminates the risks of harmful agglomerates forming, but also allows to reduce the height of the discharge zone 31 compared with known containers. In fact, in known containers the discharge zone must necessarily have a great height, even more than 10 m, since it has to perform the function of regularizing the flow of granular material arriving from the active processing zone 13 above.

It is clear that modifications and/or additions of parts may be made to the containing unit 100 as described heretofore, without departing from the field and scope of the present invention.

It is also clear that, although the present invention has been described with reference to a specific example, a person of skill in the art shall certainly be able to achieve many other equivalent forms of containing unit 100 for pressurized containers, having the characteristics as set forth in the claims and hence all coming within the field of protection defined thereby.

## Claims

1. Containing unit of material (12) used in iron and steel processes comprising:
- a container (11) having a substantially vertical longitudinal axis (X) and at least one lateral wall (17) that defines an internal cavity (17a), said lateral wall (17) being provided with a plurality of through lateral apertures (16), which put said internal cavity (17a) into communication with the outside,
- a discharge device (10) installed at least partly in said container (111) to divide said internal cavity (17a) into a first zone (13) disposed above said discharge device (10) and in which said material (12) is contained and processed, and a discharge zone (31) disposed below said discharge device (10) and through which said material (12) is discharged, in a controlled manner, by said discharge device (10), wherein said discharge device (10) comprises a plurality of movement members (14) each provided with a rotary shaft (15) disposed in one of said lateral apertures (16) and rotatable around its axis of rotation (Y) transverse to said longitudinal axis (X), and movement means (27) solid with said rotary shaft (15) so as to move said material (12) from the first zone (13) toward a discharge aperture (24) of said discharge zone (31) **characterized in that** each rotary shaft (15) comprises a first part (15a) mounted rotatably, through said lateral apertures (16), on said lateral wall (17) of said container (11) and a second part (15b) disposed cantilevered inside said internal cavity (17a), **and in that** said movement means comprise a plurality of blades (27) mounted radially on said second part (15b) of said rotary shaft (15) and defining corresponding containing cells (30) configured to contain said material (12) coming from said first zone (13) and to move it, due to the effect of the rotation of said rotary shaft (15), from said first zone (13) toward said discharge aperture (24).

2. Containing unit as in claim 1, **characterized in that** said second part (15b) of each rotary shaft (15) comprises at least two axial zones adjacent to each other along said axis of rotation (Y), **and in that** in each of said axial zones there is a specific plurality of said blades (27) that defines a corresponding wheel with blades (26).

3. Containing unit as in claim 2, **characterized in that** the blades (27) of each wheel with blades (26) are angularly staggered with respect to the blades (27) of an adjacent wheel with blades (26), to generate instantaneous movement speeds of the material (12) in the first zone (13) that are different from the corresponding and overlying adjacent columns of material (12).

4. Containing unit as in claim 3, **characterized in that** between each pair of adjacent wheels with blades (26) there is a separator disc (33), configured so as to prevent said material (12) from passing from one of said wheels with blades (26) to the other.

5. Containing unit as in claim 3 or 4, **characterized in that** the number of said axial zones, which corresponds to the number of the wheels with blades (26) of each movement member (14), is comprised between 2 and 5.

6. Containing unit as in any claim hereinbefore, **characterized in that** every rotary shaft (15) has its axis of rotation (Y) substantially converging toward said longitudinal axis (X) of said container (11).

7. Containing unit as in any claim hereinbefore, **characterized in that** said second part (15b) of each rotary shaft (15) has a length (L) less than the distance between the corresponding lateral aperture (16) and said longitudinal axis (X) of said container (11).

8. Containing unit as in any claim hereinbefore, **characterized in that** said movement member (14) has a maximum transverse size (D1), perpendicular to said axis of rotation (Y) of said rotary shaft (15), which is less than the transverse size (D2) of said internal cavity (17a) in correspondence with the corresponding lateral aperture (16).

9. Containing unit as in any claim hereinbefore, **characterized in that** said blades (27) are angularly equidistant from each other

10. Containing unit as in any claim hereinbefore, **characterized in that** said blades (27) branch off radially from a central body (28) coupled coaxially with said second part (15b) of said rotary shaft (15).

11. Containing unit as in any claim hereinbefore, **characterized in that** each of said blades (27) comprises a hooked end (29), having a protruding part which projects tangentially in the opposite direction to said determinate direction of rotation of said rotary shaft (15).

12. Containing unit as in any claim hereinbefore, **characterized in that** said rotary shaft (15) is substantially cylindrical in shape and the radial size of said blades (27) is constant, so that said containing cells (30) are all the same.

13. Containing unit as in any claim from 1 to 11, **characterized in that** said rotary shaft (15) has a cross section that varies along said axis of rotation (Y), so that, given the same radial size of said blades (27), said containing cells (30) have different volumes from each other along said axis of rotation (Y).

14. Containing unit as in any claim hereinbefore, wherein said container (11) has an axial-symmetric shape with respect to said longitudinal axis (X), **characterized in that** said movement members (14) are suitable to be disposed radially with respect to said longitudinal axis (X).

15. Containing unit as in claim 14, **characterized in that** the axes of rotation (Y) of said rotary shafts (15) lie on the same plane (P) perpendicular to said longitudinal axis (X).

16. Containing unit as in any claim hereinbefore, **characterized in that** said movement members (14) are angularly staggered with respect to each other in a uniform manner.

17. Containing unit as in claim 16, **characterized in that** there are eight of said movement members (14) and they are angularly staggered with respect to each other by 45°.

18. Containing unit as in any claim hereinbefore, **characterized in that** at least one central conveyor plate (32), with a conical or truncated cone shape, is disposed inside said internal cavity (17a), coaxial to said longitudinal axis (X) above said movement members (14).

19. Containing unit as in any claim hereinbefore, **characterized in that** a plurality of radial conveyor plates (34) are disposed inside said internal cavity (17a), above each space that divides two adjacent movement members (14), two adjacent radial conveyor plate (34) defining a discharge opening (35) through which the material (12) contained in said first zone (13) is charged in said containing cells (30).

## Patentansprüche

1. Behältereinheit von Material (12), welches in der Eisen- und Stahlverarbeitung verwendet wird, die folgendes aufweist:
- einen Behälter (11), der eine im Wesentlichen vertikale Längsachse (X) und wenigstens eine seitliche Wand (17), die einen inneren Hohlraum (17a) definiert, hat, wobei die seitliche Wand (17) mit einer Vielzahl von seitlichen Durchgangsöffnungen (16) versehen ist, welche den inneren Hohlraum (17a) in Kommunikation mit Außen legen,
- eine Abgabevorrichtung (10), die wenigstens teilweise in dem Behälter (111) installiert ist, um den inneren Hohlraum (17a) in eine erste Zone (13), die oberhalb der Abgabevorrichtung (10) angeordnet ist, und in welcher das Material (12) enthalten ist und verarbeitet wird, und eine Abgabezone (31), die unterhalb der Abgabevorrichtung (10) angeordnet ist, und durch welche das Material (12), und zwar in einer kontrollierten Weise, durch die Abgabevorrichtung (10) abgegeben wird, teilt, wobei die Abgabevorrichtung (10) eine Vielzahl von Bewegungsgliedem (14), wobei jedes mit einer Drehwelle (15) versehen ist, die in einer der seitlichen Öffnungen (16) angeordnet ist, und drehbar um ihre Drehachse (Y) quer zu der Längsachse (X) ist, und Bewegungsmittel (27), die fest mit der Drehwelle (15) sind, um das Material (12) von der ersten Zone (13) zu einer Abgabeöffnung (24) der Abgabezone (31) hin zu bewegen, aufweist, **dadurch gekennzeichnet, dass** jede Drehwelle (15) ein erstes Teil (15a), das drehbar befestigt ist, und zwar durch die seitlichen Öffnungen (16), an der seitlichen Wand (17) des Behälters (11) und ein zweites Teil (15b), das auslegermäßig innerhalb des inneren Hohlraums (17a) angeordnet ist, aufweist, **und dadurch, dass** die Bewegungsmittel eine Vielzahl von Schaufeln (27) aufweisen, die radial auf dem zweiten Teil (15b) der Drehwelle (15) befestigt sind, und entsprechende Behälterzellen (30) definieren, die konfiguriert sind, um das Material (12) zu enthalten, welches von der ersten Zone (13) kommt, und es aufgrund des Effekts der Drehung der Drehwelle (15) von der ersten Zone (13) zu der Abgabeöffnung (24) hin zu bewegen.

2. Behältereinheit nach Anspruch 1, **dadurch gekennzeichnet, dass** das zweite Teil (15b) von jeder Drehwelle (15) wenigstens zwei axiale Zonen aufweist, die benachbart zu einander entlang der Drehachse (Y) sind, **und dadurch, dass** in jeder der axialen Zonen es eine spezifische Vielzahl von den Schaufeln gibt, die ein entsprechendes Rad mit Schaufeln (26) definiert.

3. Behältereinheit nach Anspruch 2, **dadurch gekennzeichnet, dass** die Schaufeln (27) von jedem Rad mit Schaufeln (26) winkelmäßig versetzt in Bezug zu den Schaufeln (27) von eines benachbarten Rads mit Schaufeln (26) sind, um sofortige Bewegungsgeschwindigkeiten von dem Material (12) in der ersten Zone (13), die verschieden von den entsprechenden und darüberliegenden benachbarten Säulen von Material (12) sind, zu erzeugen.

4. Behältereinheit nach Anspruch 3, **dadurch gekennzeichnet, dass** es zwischen jedem Paar von benachbarten Rädern mit Schaufeln (26) eine Trennscheibe (33) gibt, die konfiguriert ist, um zu verhindern, dass das Material (12) von einem der Räder mit Schaufeln (26) zu dem anderen gelangt.

5. Behältereinheit nach Anspruch 3 oder 4, **dadurch gekennzeichnet, dass** die Anzahl der axialen Zonen, welche der Anzahl von den Rädern mit Schaufeln (26) von jedem Bewegungsglied (14) entspricht, zwischen 2 und 5 liegt.

6. Behältereinheit nach einem der vorhergehenden Ansprüche, **dadurch gekennzeichnet, dass** jede Drehwelle (15) ihre Drehachse (Y) im Wesentlichen konvergierend zu der Längsachse (X) des Behälters (11) hin hat.

7. Behältereinheit nach einem der vorhergehenden Ansprüche, **dadurch gekennzeichnet, dass** das zweite Teil (15b) von jeder Drehwelle (15) eine Länge (L) hat, die kleiner als der Abstand zwischen der entsprechenden seitlichen Öffnung (16) und der Längsachse (X) des Behälters (11) ist.

8. Behältereinheit nach einem der vorhergehenden Ansprüche, **dadurch gekennzeichnet, dass** das Bewegungsglied (14) eine maximale Quergröße (Dl) hat, und zwar senkrecht zu der Drehachse (Y) der Drehwelle (15), welche kleiner als die Quergröße (D2) des inneren Hohlraums (17a) in Korrespondenz zu der entsprechenden seitlichen Öffnung (16) ist.

9. Behältereinheit nach einem der vorhergehenden Ansprüche, **dadurch gekennzeichnet, dass** die Schaufeln (27) winkelmäßig äquidistant von einander sind.

10. Behältereinheit nach einem der vorhergehenden Ansprüche, **dadurch gekennzeichnet, dass** die Schaufeln (27) sich radial von einem zentralen Körper (28) abzweigen, der koaxial mit dem zweiten Teil (15b) der Drehwelle (15) gekuppelt ist.

11. Behältereinheit nach einem der vorhergehenden Ansprüche, **dadurch gekennzeichnet, dass** jede der Schaufeln (27) ein Hakenende (29) aufweist, welches ein vorstehendes Teil hat, welches tangential in die entgegengesetzte Richtung zu der bestimmten Richtung der Drehung der Drehwelle (15) hervorragt.

12. Behältereinheit nach einem der vorhergehenden Ansprüche, **dadurch gekennzeichnet, dass** die Drehwelle (15) im Wesentlichen zylindrisch in der Form ist und die radiale Größe der Schaufeln (27) konstant ist, so dass die Behälterzellen (30) alle die gleichen sind.

13. Behältereinheit nach einem der Ansprüche von 1 bis 11, **dadurch gekennzeichnet, dass** die Drehwelle (15) einen Querschnitt hat, der entlang der Drehachse (Y) variiert, so dass, gegeben dieselbe radiale Größe der Schaufeln (27), die Behälterzellen (30) verschiedene Volumen von einander entlang der Drehachse (Y) haben.

14. Behältereinheit nach einem der vorhergehenden Ansprüche, wobei der Behälter (11) eine axial-symmetrische Form in Bezug zu der Längsachse (X) hat, **dadurch gekennzeichnet, dass** die Bewegungsglieder (14) geeignet sind, um radial in Bezug zu der Längsachse (X) angeordnet zu werden.

15. Behältereinheit nach Anspruch 14, **dadurch gekennzeichnet, dass** die Drehachse (Y) der Drehwellen (15) auf derselben Ebene (P) senkrecht zu der Längsachse (X) liegen.

16. Behältereinheit nach einem der vorhergehenden Ansprüche, **dadurch gekennzeichnet, dass** die Bewegungsglieder (14) winkelmäßig in Bezug zu einander in einheitlicher Weise versetzt sind.

17. Behältereinheit nach Anspruch 16, **dadurch gekennzeichnet, dass** es acht der Bewegungslieder (14) gibt und diese in Bezug zu einander um 45° winkelmäßig versetzt sind.

18. Behältereinheit nach einem der vorhergehenden Ansprüche, **dadurch gekennzeichnet, dass** wenigstens eine zentrale Förderplatte (32), und zwar mit einer konischen oder kegelstumpfförmigen Form, innerhalb des inneren Hohlraums (17a) angeordnet ist, und zwar koaxial zu der Längsachse (X) oberhalb der Bewegungsglieder (14).

19. Behältereinheit nach einem der vorhergehenden Ansprüche, **dadurch gekennzeichnet, dass** eine Vielzahl von radialen Förderplatten (34) innerhalb des inneren Hohlraums (17a) angeordnet sind, und zwar oberhalb jedes Raums, der zwei benachbarte Bewegungsglieder (14) teilt, wobei zwei benachbarte radiale Förderplatten (34) eine Abgabeöffnung (35), durch welche das in der ersten Zone (13) enthaltene Material (12) in die Behälterzellen (30) geladen wird, definieren.

## Revendications

1. Unité de confinement de matériau (12) utilisée dans des procédés sidérurgiques, comprenant :
- un récipient (11) ayant un axe longitudinal sensiblement vertical (X) et au moins une paroi latérale (17) qui définit une cavité interne (17a), ladite paroi latérale (17) étant pourvue d'une pluralité d'ouvertures latérales traversantes (16), qui mettent ladite cavité interne (17a) en communication avec l'extérieur,
- un dispositif de décharge (10) installé au moins en partie dans ledit récipient (111) pour diviser ladite cavité interne (17a) en une première zone (13) disposée au-dessus dudit dispositif de décharge (10) et dans laquelle ledit matériau (12) est confiné et traité, et une zone de décharge (31) disposée sous ledit dispositif de décharge (10) et à travers laquelle ledit matériau (12) est déchargé, de manière commandée, par ledit dispositif de décharge (10), dans lequel ledit dispositif de décharge (10) comprend une pluralité d'éléments de déplacement (14) munis chacun d'un arbre rotatif (15) disposé dans l'une desdites ouvertures latérales (16) et pouvant tourner autour de son axe de rotation (Y) transversalement audit axe longitudinal (X), et des moyens de déplacement (27) solidaires dudit arbre rotatif (15) de manière à déplacer ledit matériau (12) de la première zone (13) vers une ouverture de décharge (24) de ladite zone de décharge (31), **caractérisée en ce que** chaque arbre rotatif (15) comprend une première partie (15a) montée de manière rotative, à travers lesdites ouvertures latérales (16), sur ladite paroi latérale (17) dudit récipient (11) et une seconde partie (15b) disposée en porte à faux à l'intérieur de ladite cavité interne (17a), et **en ce que** lesdits moyens de déplacement comprennent une pluralité d'aubes (27) montées radialement sur ladite seconde partie (15b) dudit arbre rotatif (15) et définissant des cellules de confinement correspondantes (30) configurées pour confiner ledit matériau (12) provenant de ladite première zone (13) et pour le déplacer, en raison de l'effet de la rotation dudit arbre rotatif (15), de ladite première zone (13) vers ladite ouverture de décharge (24).

2. Unité de confinement selon la revendication 1, **caractérisée en ce que** ladite seconde partie (15b) de chaque arbre rotatif (15) comprend au moins deux zones axiales adjacentes les unes aux autres le long dudit axe de rotation (Y), et **en ce que** dans chacune desdites zones axiales se trouve une pluralité spécifique desdites aubes (27) qui définit une roue correspondante avec des aubes (26).

3. Unité de confinement selon la revendication 2, **caractérisée en ce que** les aubes (27) de chaque roue à aubes (26) sont étagées angulairement par rapport aux aubes (27) d'une roue à aubes adjacente (26), afin de générer des vitesses de déplacement instantanées du matériau (12) dans la première zone (13) qui sont différentes des colonnes de matériau correspondantes et superposées adjacentes (12).

4. Unité de confinement selon la revendication 3, **caractérisée en ce qu'**un disque séparateur (33) est prévu entre chaque paire de roues à aubes adjacentes (26), configuré de manière à empêcher ledit matériau (12) de passer de l'une desdites roues à aubes (26) à l'autre.

5. Unité de confinement selon la revendication 3 ou 4, **caractérisée en ce que** le nombre desdites zones axiales, qui correspond au nombre des roues à aubes (26) de chaque élément de déplacement (14), est compris entre 2 et 5.

6. Unité de confinement selon l'une quelconque des revendications précédentes, **caractérisée en ce que** chaque arbre rotation (15) a son axe de rotation (Y) sensiblement convergent vers ledit axe longitudinal (X) dudit récipient (11).

7. Unité de confinement selon l'une quelconque des revendications précédentes, **caractérisée en ce que** ladite seconde partie (15b) de chaque arbre rotatif (15) a une longueur (L) inférieure à la distance entre l'ouverture latérale correspondante (16) et ledit axe longitudinal (X) dudit récipient (11).

8. Unité de confinement selon l'une quelconque des revendications précédentes, **caractérisée en ce que** ledit élément de déplacement (14) a une taille transversale maximum (D1), perpendiculaire audit axe de rotation (Y) dudit arbre rotatif (15), qui est inférieure à la taille transversale (D2) de ladite cavité interne (17a) en correspondance avec l'ouverture latérale correspondante (16).

9. Unité de confinement selon l'une quelconque des revendications précédentes, **caractérisée en ce que** lesdites aubes (27) sont angulairement équidistantes les unes des autres.

10. Unité de confinement selon l'une quelconque des revendications précédentes, **caractérisée en ce que** lesdites aubes (27) se ramifient radialement à partir d'un corps central (28) couplé de manière coaxiale à ladite seconde partie (15b) dudit arbre rotatif (15).

11. Unité de confinement selon l'une quelconque des revendications précédentes, **caractérisée en ce que** chacune desdites aubes (27) comprend une extrémité crochue (29) ayant une partie en saillie qui fait saillie tangentiellement dans la direction opposée à ladite direction de rotation déterminée dudit arbre rotatif (15).

12. Unité de confinement selon l'une quelconque des revendications précédentes, **caractérisée en ce que** ledit arbre rotatif (15) a une forme sensiblement cylindrique, et = la taille radiale desdites aubes (27) est constante, de sorte que lesdites cellules de confinement (30) sont toutes identiques.

13. Unité de confinement selon l'une quelconque des revendications 1 à 11, **caractérisée en ce que** ledit arbre rotatif (15) a une section transversale qui varie le long dudit axe de rotation (Y), de sorte qu'étant donnée la même taille radiale desdites aubes (27), lesdites cellules de confinement (30) ont des volumes différents les unes des autres le long dudit axe de rotation (Y).

14. Unité de confinement selon l'une quelconque des revendications précédentes, dans laquelle ledit récipient (11) a une forme à symétrie axiale par rapport audit axe longitudinal (X), **caractérisée en ce que** lesdits éléments de déplacement (14) sont aptes à être disposés radialement par rapport audit axe longitudinal axe (X).

15. Unité de confinement selon la revendication 14, **caractérisée en ce que** les axes de rotation (Y) desdits arbres rotatifs (15) sont situés dans le même plan (P) perpendiculaire audit axe longitudinal (X).

16. Unité de confinement selon l'une quelconque des revendications précédentes, **caractérisée en ce que** lesdits éléments de déplacement (14) sont étagés angulairement les uns par rapport aux autres de manière uniforme.

17. Unité de confinement selon la revendication 16, **caractérisée en ce qu'**il y a huit desdits éléments de déplacement (14), et **en ce qu'**ils sont étagés angulairement les uns par rapport aux autres de 45°.

18. Unité de confinement selon l'une quelconque des revendications précédentes, **caractérisée en ce qu'**au moins une plaque de transport centrale (32), de forme conique ou tronconique, est disposée à l'intérieur de ladite cavité interne (17a), coaxiale audit axe longitudinal (X) au-dessus desdits éléments de déplacement (14).

19. Unité de confinement selon l'une quelconque des revendications précédentes, **caractérisée en ce que** plusieurs plaques de transport radiales (34) sont disposées à l'intérieur de ladite cavité interne (17a), au-dessus de chaque espace qui divise deux éléments de déplacement adjacents (14), deux plaques de transport radiales adjacentes (34) définissant une ouverture de décharge (35) à travers laquelle le matériau (12) confiné dans ladite première zone (13) est chargé dans lesdites cellules de confinement (30).
